# EUROPÄISCHE PATENTSCHRIFT

(11) **EP 0 565 745 B1**
(45) Veröffentlichungstag und Bekanntmachung des Hinweises auf die Patenterteilung: **10.07.1996**
(21) Anmeldenummer: 92106335.0
(22) Anmeldetag: 13.04.1992
(51) Int. Cl.: G05B 23/02, F16P 7/02

(54) **Überwachung eines Signalwechsels, insbesondere in selbstkontrollierenden Steuerungssystemen**
Monitoring of a signal-switching, particularly in self-checking controlling systems
Surveillance d'un changement de signal, en particulier dans des systèmes de pilotage

(43) Veröffentlichungstag der Anmeldung: 20.10.1993
(73) Patentinhaber: SCHNEIDER ELECTRIC GMBH, D-40880 Ratingen (DE)
(72) Erfinder: Stahl, Kurt, W-5270 Gummersbach 1 (DE)
(74) Vertreter: Köhne, Friedrich, Dipl.-Ing.

(56) Entgegenhaltungen:
- EP-A- 0 105 054
- DE-A- 2 319 626
- DE-A- 3 028 196
- DE-A- 3 830 742
- DE-C- 2 818 173
- FR-A- 2 580 056
- GB-A- 1 466 367

## Beschreibung

Die Erfindung betrifft eine Anordnung zur Überwachung eines Signalwechsels in selbstkontrollierenden Steuerungssystemen mit einem Ausschaltwischrelais sowie mit einem Rückführkreis.

Überall dort, wo das Zustandekommen eines gefährlichen Zustandes oder einer gefährlichen Bewegung von einem oder mehreren bestimmten Signalwechseln in der Eingangsperipherie abhängt, benötigt man zuverlässige Überwachunqsschaltungen, um unerwartete oder unbeabsichtigte Situationen und Selbstanläufe bzw. um Kollisionen von einem oder mehreren beweglichen Maschinenteilen auszuschließen. Dies gilt insbesondere für viele Bereiche des Maschinenbaues, in denen die Maschinen gefahrbringende Bewegungen ausführen und bei denen sichergestellt sein muß, daß Personen von den gefahrbringenden Räumen ferngehalten werden bzw. daß Personen nur in diesen gefahrbringenden Räumen tätig werden können, wenn mit Sicherheit ausgeschlossen ist, daß die Maschine ungewollt in Gang gesetzt wird.

Es gibt bekannte Überwachungsschaltungen, in denen man das Problem mit sogenannten Sicherheitskomponenten, z. B. Si-cherheitsendschaltern, zu lösen versucht, die einen gewissen Anteil von Fehler- und Manipulationsmöglichkeiten allein durch ihre Konstruktionseigenschaften ausschließen sollen. Das gelingt aber nur zum Teil. Die aus der Praxis bekannten tückischen Fehler an Anschlußleitungen und -klemmen werden dadurch nicht erfaßt. Das bedeutet, daß Eingangssignale, die allein mit solchen Sicherheitskomponenten erzeugt werden, trotzdem fehlerhaft sein können.

Im Bereich des Unfallschutzes werden im allgemeinen Signale aus der Umgebung bzw. Peripherie benötigt, die geeignet sind, in sogenannten redundanten, selbstkontrollierenden Steuerungen Erstfehler zuverlässig zu erkennen und die gefährliche Maschine in den sicheren Zustand zu bringen.

Es seien hier zum besseren Verständnis nur zwei typische Anwendungsbeispiele bei hydraulischen Pressen herausgegriffen. Bei derartigen hydraulischen Pressen gibt es Betriebsartenwahlschalter, die die Auswahl mehrerer Betriebsarten gestatten, wie Einrichten, Einzelhub, Zweihand, EinzelhubFuß usw. Der Fußbefehl darf aber bei betätigtem Fußtaster niemals durch das Einstellen des Wahlschalters auf Einzelhub-Fuß wirksam werden, sondern erst dann, wenn die Betriebsart Einzelhub-Fuß vorgewählt ist und erst anschliessend der Fußbefehl erteilt wird.

Ein weiteres Beispiel ist folgendes. Hydraulikpressen sind vorwiegend mit Wegeventilen mit Federrückstellung ausgestattet. Diese Wegeventile müssen in einer Sicherheitshydraulik aus Redundanzgründen seriell angeordnet und ihre Ventilkolben auf sperrende Position abgefragt werden. Meistens sind zwei derartige Wegeventile vorgesehen. Ein Bruch der Kolbenrückstellfeder in einem der beiden Ventile könnte zur Folge haben, daß der Ventilkolben aus seiner sperrenden Position herausgleitet und den Ölstrom teilweise freigibt. Durch die serielle Anordnung der Ventile würde dieser Fehler trotz Verlust der Redundanz zunächst nicht auffallen, solange das zweite Ventil fehlerfrei arbeitet. Ein Bruch der Kolbenrückstellfeder im zweiten Ventil würde allerdings sofort dazu führen, daß die Hydraulik außer Kontrolle gerät, weil der Ölstrom bei Abschaltung der Ventile nicht mehr vollständig und zuverlässig abgesperrt werden kann. Eine gefährliche Bewegung des Hydraulikzylinders der Hydraulikpresse darf aber nur dann zustandekommen, wenn die elektrische Sicherheitsschaltung nachgewiesen hat, daß beide Ventilkolben der verantwortlichen, redundanten Ventile aus der sperrenden Position und nicht aus irgendeiner Zwischenstellung herausbewegt wurden, um den Ölstrom zum Zylinder für die gefährliche Bewegung freizugeben. Weitere Beispiele aus der Praxis sind verschiebbare Schutzgitter oder Türen an Werkzeugmaschinen.

Eine zu Anfang angegebene Anordnung ist aus der EP 0 105 054 B1 bekannt. Es handelt sich hierbei um eine spezielle Schaltungseinrichtung zur aktiven Kontrolle von paarig angeordneten Endschaltern, welche der statischen oder dynamischen Überwachung von Absicherungseinrichtungen an Gefahrenstellen, wie Schutzgitter, mechanische Abschirmungen, Barrieren oder dergleichen dienen, wobei die beiden Endschalter, ein Relais mit definierter Abfallverzugszeit bzw. ein Ausschaltwischrelais und weitere Relais zwischen Versorgungsleitungen derart geschaltet sind, daß die Relais den Ausgang nur dann durchschalten, wenn beide Endschalter innerhalb der Abfallverzugszeit des Ausschaltwischrelais betätigt worden sind. Diese Schaltungseinrichtung ermöglicht auch eine ständige Überwachung der Funktionstüchtigkeit der beiden Endschalter, der Relais und der Leitungen gegen Überbrückung, Unterbrechung oder gar Manipulation. In diesem Zusammenhang steht auch der bei dieser Schaltungseinrichtung vorgesehene Rückführkreis, in dem Öffnerkontakte von zwei unterschiedlichen Relais vorgesehen sind.

Eine weitere elektrische Sicherheitssteuerung für Pressen, Stanzen oder dergleichen ist aus der DE-A-2 319 626 bekannt. Die Sicherheitssteuerung arbeitet mit Relais, deren Kontakte in Reihe in den Überwachungs- oder Steuerkreisen liegen. Die Sicherheitssteuerung wird durch zwei Einrücktaster betätigt. Dies sind in der Praxis zwei Handschalter, die weit von der betreffenden Presse oder der Stanze entfernt angeordnet sind und die von der Bedienungsperson entsprechend mit zwei Händen betätigt werden müssen, um auf diese Weise die Bedienungsperson während des Bewegungsvorganges des Pressenstempels vor Gefahr zu schützen. Diese Einrücktaster besitzen einen Doppelkontakt aus einem Öffner und einem Schließer. Damit sind zwei Relais invers steuerbar. Hieran schließen sich Überwachungs- und Steuerkreise an, die so ausgestaltet sind, daß sie eine Selbstüberwachung durchführen, d. h. bei Störungen in der Elektrik, z. B. in den Relais und insbesondere an den Schaltkontakten, ein Abschalten der Maschine bewirken. Bei diesem Stand der Technik geht es um das besondere Problem, Gefahrenquellen festzustellen, die nicht in der elektrischen Sicherheitssteuerung als solcher zu suchen sind. Wenn beispielsweise die Wirkung der Bremsen einer Presse durch natürliche Abnutzung der Bremsbeläge nachläßt, ergibt sich aus der Vergrößerung des Bremsweges bzw. eines unerwünschten Nachlaufes eine erhebliche Verletzungsgefahr. Um feststellen zu können, ob im Falle eines Nachlassens der Bremswirkung der Bremse ein Nachlauf eingetreten ist, wird die eigentliche Sicherheitssteuerung mit einer zusätzlichen Sicherheitssteuerung verkettet, die mit einer Steuerkurve zusammenarbeitet, die ihrerseits mit der Kurbelwelle der Presse synchron umläuft und auf zwei invers geschaltete Relais einwirkt, so daß bei Auftreten eines Nachlaufes die Maschine abgeschaltet wird.

Eine weitere Sicherheitsschaltung ist aus der DE-A-38 30 742 bekannt, die mit einer Erweiterungsschaltung verknüpft ist, wobei die Sicherheitsschaltung und die Erweiterungsschaltung jeweils drei zwangsgeführte Relais aufweisen. Es geht hier um das Problem, durch schaltungstechnisch einfache Maßnahmen eine Erhöhung der Freigabestrompfade zu ermöglichen, ohne damit die Sicherheit zu beeinträchtigen.

Der Erfindung liegt demgegenüber die Aufgabe zugrunde, eine Anordnung zu schaffen, welche arbeitszyklisch vor jeder Einleitung eines gefährlichen Zustandes oder einer gefährlichen Bewegung einer Maschine den Anfangszustand und die Anfangsstellung durch Überwachung eines jeweils erfolgten Signalwechsels zu kontrollieren gestattet.

Ausgehend von der zu Anfang angegebenen Anordnung wird die Aufgabe dadurch gelöst, daß mindestens ein Geberelement vorgesehen ist, welches mit einem Öffnerkontakt und einem Schließerkontakt ausgestattet ist, deren gemeinsamer Leitungspunkt mit einer Versorgungsleitung verbunden ist, wobei der Öffnerkontakt des Geberelementes an das eine Spulenende des Ausschaltwischrelais mit definierter Wischzeit angeschlossen ist, welches mit einem Wechslerkontakt und einem zusätzlichen Öffnerkontakt ausgestattet ist, wobei ferner der Schließerkontakt des Geberelementes mit dem einen Ende der Spule eines weiteren Relais verbunden ist, das einen Öffner- und zwei Schließerkontakte besitzt, wobei außerdem der Öffner- und die Schließerkontakte des Relais sowie die Kontakte des Ausschaltwischrelais zwangsgeführt sind, wobei das andere Spulenende des Ausschaltwischrelais über den Kontaktöffner des eigenen Wechslerkontaktes an der anderen Versorgungsleitung und der Schließerkontakt dieses Wechslerkontaktes mit dem anderen Spulenende des Relais verbunden sind und dieses Spulenende parallel über den eigenen Selbsthaltekontakt an die andere Versorgungsleitung angeschlossen ist, und der Schließerkontakt des Relais in einem Sicherheitskreis liegt, der direkt mit dem Freigabekreis des Steuerungssystems zusammenwirkt und der Öffnerkontakt des Ausschaltwischrelais und der Öffnerkontakt des Relais in dem Rückführkreis liegen.

Hierdurch ergibt sich der wesentliche Vorteil, daß eine selbstüberwachende Signalerfassung und -bearbeitung sowie eine potentialfreie Übergabe mindestens eines kontrollierten Signals an eine höhere Sicherheitsebene des Steuerungssystems erfolgt.

Vorteilhafte Ausgestaltungen der Erfindung ergeben sich aus den Unteransprüchen.

In der Zeichnung sind Ausführungsbeispiele der erfindungsgemäßen Anordnung in Form elektrischer Schaltschemata dargestellt, und zwar zeigen
- Fig. 1: eine Prinzipdarstellung einer elektrischen Schaltung,
- Fig. 2: eine vervollständigte elektrische Schaltung und
- Fig. 3 bis 12: Abwandlungen der elektrischen Schaltung gemäß Fig. 2.

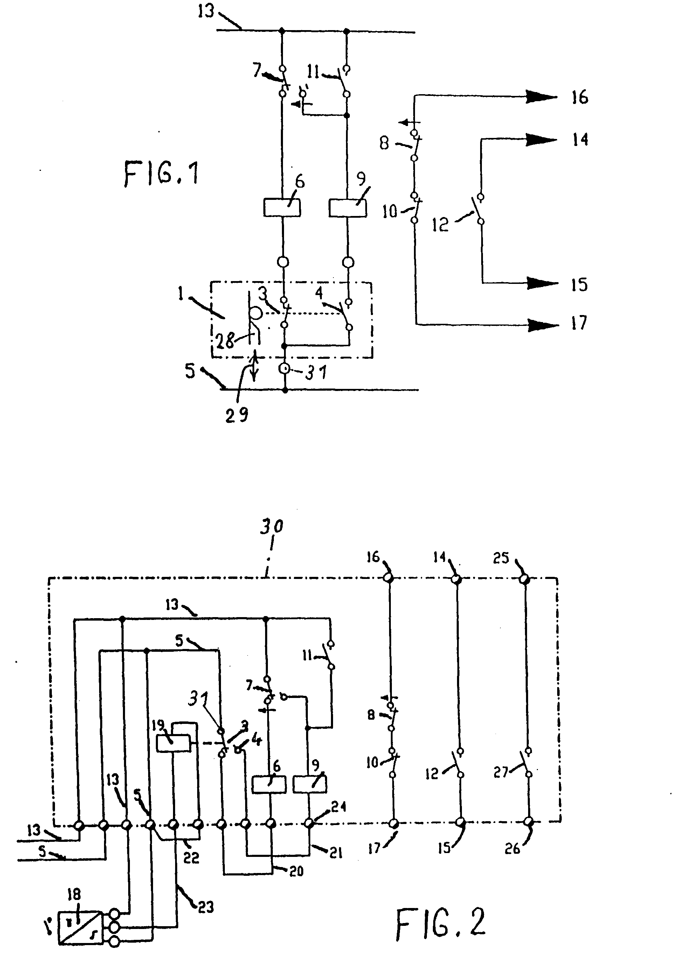

Fig. 1 zeigt die Prinzipschaltung mit einem Geberelement 1, welches beispielsweise aus einem einfachen Positionsschalter bestehen kann, welcher von einem in Richtung des Pfeiles 29 bewegten Schaltnocken 28 angesteuert bzw. betätigt wird. Das Geberelement 1 ist mit einem Öffnerkontakt 3 und einem Schließerkontakt 4 ausgestattet. Der gemeinsame Leitungspunkt 31 dieser Kontakte ist mit der einen Versorgungsleitung 5, gemäß Fig. 1 mit der unteren Versorgungsleitung, verbunden. Der Öffnerkontakt 3 ist an das eine Spulenende eines Ausschaltwischrelais 6 angeschlossen, welches eine definierte Wischzeit hat. Das Ausschaltwischrelais 6 ist mit einem Wechslerkontakt 7 und einem zusätzlichen Öffnerkontakt 8 ausgestattet. Der Schließerkontakt 4 des Geberelementes 1 ist mit dem einen Ende der Spule eines weiteren Relais 9 verbunden, das seinerseits einen Öffnerkontakt 10 und zwei Schließerkontakte 11 und 12 besitzt. Die Kontakte 10, 11 und 12 dieses Relais 9 und die Kontakte 7 und 8 des Ausschaltwischrelais 6 müssen zwangsgeführt sein.

Das andere Spulenende des Ausschaltwischrelais 6 liegt über dem Öffnerkontakt des eigenen Wechslerkontaktes 7 an der anderen Versorgungsleitung 13, nämlich in Figur 1 an der oberen Versorgungsleitung. Der Schließerkontakt dieses Wechslerkontaktes 7 ist mit dem zweiten Spulenende des Relais 9 verbunden. Dieses Spulenende ist aber gleichzeitig noch parallel dazu über einen eigenen Selbsthaltekontakt 11 in Form des dargestellten Schließerkontaktes an die in Fig. 1 obere Versorgungsleitung 13 angeschlossen. Der Schließerkontakt 12 des Relais 9 liegt in einem Sicherheitskreis mit den Bezugszeichen 14 und 15, der direkt mit dem nicht gezeichneten Freigabekreis eines Steuerungssystems zusammenwirkt. Der Öffnerkontakt 8 des Ausschaltwischrelais 6 und der Öffnerkontakt 10 des Relais 9 liegen in einem Rückführkreis mit den Bezugszeichen 16 und 17.

Die Wirkungsweise ist im wesentlichen folgende.

Im Ruhezustand liegt die Spule des Ausschaltwischrelais 6 direkt an Spannung zwischen den Versorgungsleitungen 13 und 5. Durch die Betätigung des Positionsschalters 1, beispielsweise mittels des Schaltnockens 28, öffnet dessen Öffnerkontakt. Ferner wird der Schließerkontakt 4 geschlossen. Durch das Öffnen des Öffnerkontaktes 3 wird das Ausschaltwischrelais 6 über die Dauer der definierten Wischzeit aktiviert und der Wechslerkontakt 7 des Ausschaltwischrelais legt das Potential der oberen Versorgungsleitung 13 über seine Schließerfunktion an das Spulenende des Relais 9. Das Relais 9 hat nunmehr über den Schließerkontakt 4 des Positionsschalters 1 mit seinem anderen Spulenende auch Verbindung zur unteren Versorgungsleitung 5. Damit wird das Relais 9 eingeschaltet. Über seinen eigenen Schließerkontakt 11 geht das Relais 9 durch die Verbindung mit der oberen Versorgungsleitung 13 in Selbsthaltung und wird damit unabhängig von der Wischdauer des Ausschaltwischrelais 6. Die Selbsthaltung des Relais 9 hält solange an, wie der Positionsschalter 1 betätigt ist. Damit wird der sogenannte Sicherheitskreis 14, 15 über den Schließerkontakt 12 des Relais 9 geschlossen gehalten. Der Sicherheitskreis 14, 15 wirkt direkt mit dem nicht gezeichneten Freigabekreis eines Steuerungssystems für die gefährliche Bewegung der Maschine zusammen.

Das zu Anfang erläuterte aus der EP-0 105 054 B1 bekannte Steuerungssystem weist einen Rückführkreis auf. In einem solchen Rückführkreis können die Einschaltbedingungen aus der Peripherie für den Start einer gefährlichen Bewegung zusammengefaßt sein. Bei dem Ausführungsbeispiel nach Fig. 1 bildet der vereinfacht dargestellte Schaltkreis 16, 17 mit dem Öffnerkontakt 8 des Ausschaltwischrelais 6 und dem Öffnerkontakt 10 des Relais 9 einen Teil eines solchen Rückführkreises. Ein Startbefehl im Steuerungssystem zu einer gefährlichen Bewegung kann nicht zustandekommen, wenn das Ausschaltwischrelais 6 oder das Relais 9 von einer vorausgegangenen Aktivierung oder durch Manipulation fehlerhaft eingeschaltet sind und den Schaltkreis 16, 17 mit den Öffnerkontakten 8 und/oder 10 zum Zeitpunkt des Maschinenstarts geöffnet halten.

Bei der erfindungsgemäßen Anordnung wird somit über das Ausschaltwischrelais 6 arbeitszyklisch die Rückstellkontrolle des Positionsschalters 1 erzwungen.

Das in Fig. 1 dargestellte Geberelement 1 kann nicht nur aus einem einfachen Positionsschalter bestehen, sondern es kann wahlweise auch einen Sicherheitsendschalter oder einen Näherungsschalter oder einen Sensor oder einen anderen geeigneten Signalgeber aufweisen.

Fig. 2 zeigt eine vervollständigte elektrische Schaltung der erfindungsgemäßen Anordnung. Die Schaltung beruht auf der Prinzipschaltung nach Fig. 1, so daß für die gleichen oder gleichwirkenden Teile die gleichen Bezugszeichen 3 bis 17 aus Fig. 1 verwendet worden sind. Wie mit dem Bezugszeichen 30 und der strichpunktierten Linie angedeutet ist, ist bei dem Ausführungsbeispiel nach Fig. 2 die Überwachungsschaltung in einem Gehäuse 30 untergebracht, welches geschlossen und von außen normalerweise nicht zugänglich ist. In dem Gehäuse sind die Relais 6 und 9 sowie ein weiteres Relais 19 mit allen ihren Relaiskontakten untergebracht. Das Gehäuse ist mit Gehäuseanschlußklemmen für externe Anschlüsse versehen. Die Anschlußklemmen sind in teilgefüllten Kreisen auf den strichpunktierten Linien liegend dargestellt, wie zum Beispiel bei Bezugszeichen 24.

Bei der Schaltung nach Fig. 2 ist der in Fig. 1 dargestellte externe Positionsschalter 1 durch ein internes Minirelais 19 ersetzt worden, welches ebenfalls einen öffnerkontakt 3 und einen Schließerkontakt 4 aufweist. Das Minirelais 19 erfüllt hier die gleiche Funktion wie der Positionsschalter 1. Das Eingangssignal kann nun auch durch einen einzelnen Kontakt, einen beliebigen Sensor, oder wie in Fig. 2 dargestellt, durch einen Näherungsschalter 18 als Geberelement erzeugt werden. Fig. 2 zeigt ferner eine externe Leitungsverbindung 22. Je nachdem, ob die Leitungsverbindung 22, die das eine Spulenende des Minirelais 19 auf festes Potential der Versorgungsspannung legt, mit der unteren Versorgungsleitung 5 oder mit der oberen Versorgungsleitung 13 verbunden ist, können als Näherungsschalter 18 pnp- oder npn-Typen angeschlossen werden. Es handelt sich hierbei um in der Fachwelt allgemein bekannte Bezeichnungen im Zusammenhang mit einer Transistorart, das heißt man unterscheidet zwischen npn- und pnp-Transistoren. Ein npn-Transistor weist zwei äußere negative n-Leiter und in der Mitte einen positiven p-Leiter auf mit dazwischenliegenden Grenzschichten. Ein pnp-Transistor weist dagegen zwei äußere positive p-Leiter und dazwischen einen negativen n-Leiter auf. Bei dem npn-Transistor liegt die Last zwischen Pluspol und Ausgang, dagegen bei dem pnp-Transistor liegt die Last zwischen Minuspol und Ausgang. Beide Ausführungen gibt es in Schließer- und Öffnerfunktion. Wie Fig. 2 ferner verdeutlicht, erfaßt die Leitung 23 am anderen Spulenanschluß nach außen das eigentliche Eingangssignal des Näherungsschalters 18 bzw. des Sensors oder Initiators.

Mit der Wahl der Funktion des Eingangssignals am Näherungsschalter 18 als Schließer oder Öffner und mit der Vertauschung der beiden externen Drahtverbindungen 20 und 21 an den Spulenanschlüssen der Relais 6 und 9 kann bestimmt werden, ob man einen Signalwechsel von LOW nach HIGH oder von HIGH nach LOW überwachen möchte. Wie Fig. 2 ferner veranschaulicht, ist im Relais 9 noch ein weiterer Schließerkontakt 27 zugeordnet, der einen weiteren potentialfreien Sicherheitskreis 25, 26 bildet, um - falls erforderlich - zwei getrennte sicherheitsrelevante Stromkreise des Steuerungssystems der Maschine zu kontrollieren, z. B. eine Vorwärts- und Rückwärtsbewegung.

Die Wirkungsweise der Schaltung nach Fig. 2 beruht im wesentlichen auf der Wirkungsweise, die zu Fig. 1 erläutert worden ist. Es wird hier jedoch als Ausführungsbeispiel ein Geberelement 18 bzw. ein Signalgenerator in Form eines pnp-Näherungsschalters als Dreileiter-Typ mit Schließerfunktion angenommen, bei dessen Bedämpfung das Minirelais 19 erregt wird. Das Minirelais ist einerseits über die Leitung 23 und andererseits über die Leitung 22 an der unteren Versorgungsleitung 5 angeschlossen und wird somit mit Spannung versorgt. Über den unbetätigten Öffnerkontakt 3 und über seinen eigenen Wechslerkontakt 7 lag die Spule des Ausschaltwischrelais 6 an Spannung. Mit der Erregung der Spule des Minirelais 19 werden der Öffnerkontakt 3 und der Schließerkontakt 4 umgeschaltet und das eine Spulenende des Relais 9 über die Leitung 21 mit der unteren Versorgungsleitung 5 verbunden. Gleichzeitig legt der Wechslerkontakt 7 des Ausschaltwischrelais 6 das andere Spulenende des Relais 9 auf das Potential der oberen Versorgungsleitung 13. Damit wird das Relais 9 erregt und geht über seinen eigenen Schließerkontakt 11 in Selbsthaltung, die solange erhalten bleibt, wie die Bedämpfung des Näherungsschalters 18 anhält. Mit der Erregung des Relais 9 schließen auch die Kontakte 12 und 27 in den Ausgangskreisen 14, 15 und 25, 26. Der Schaltkreis 16, 17, der den Teil des Rückführkreises im Steuerungssystem darstellt, läßt dagegen eine Wiedereinschaltung der gefährlichen Maschinenbewegung nicht zu, wenn der Öffnerkontakt 8 des Ausschaltwischrelais 6 und der Öffnerkontakt 10 des Relais 9 nach einem vorhergehenden Schaltvorgang bei der Entregung nicht abgefallen sein sollten. Im Endergebnis tritt auch hier eine selbstüberwachende Signalerfassung und -verarbeitung ein.

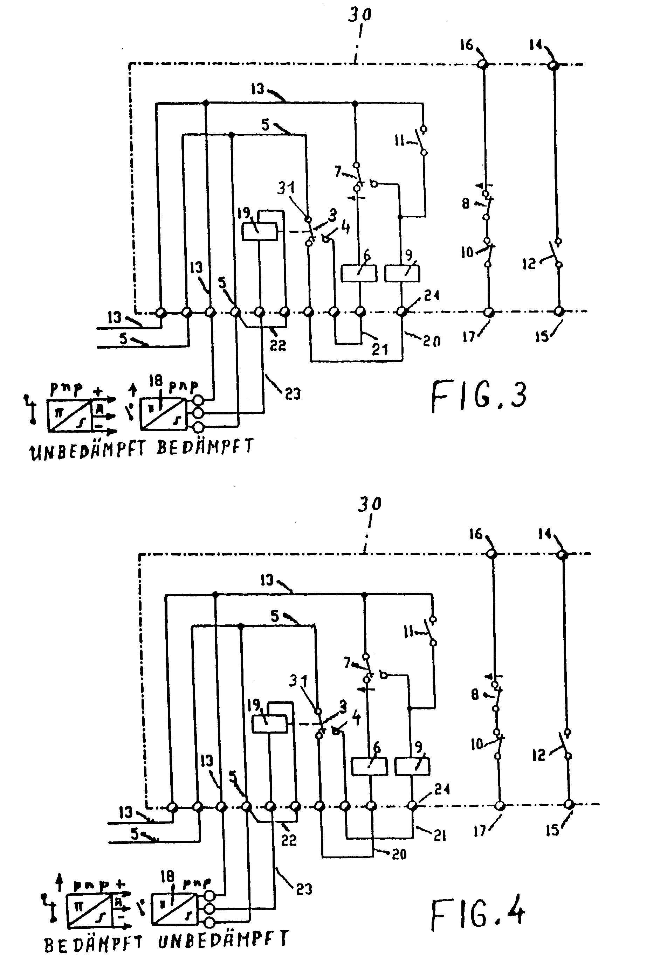

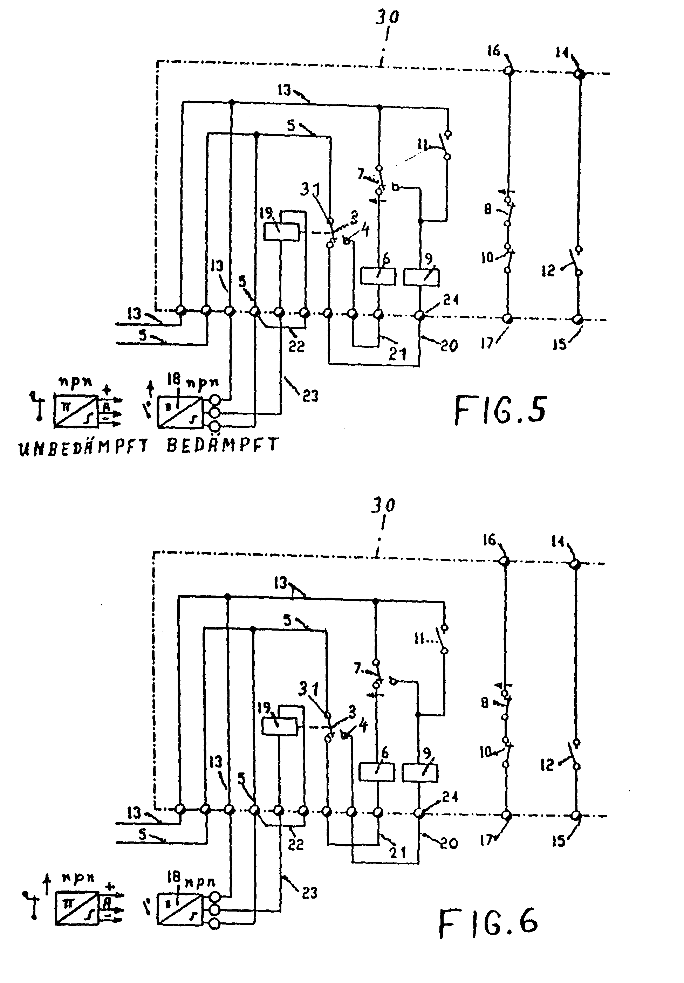

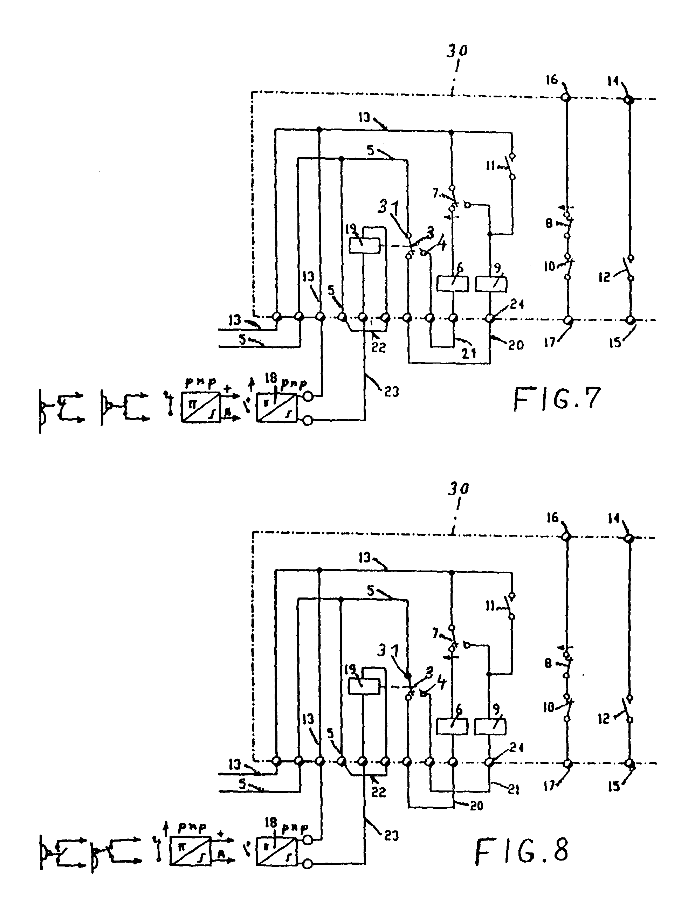

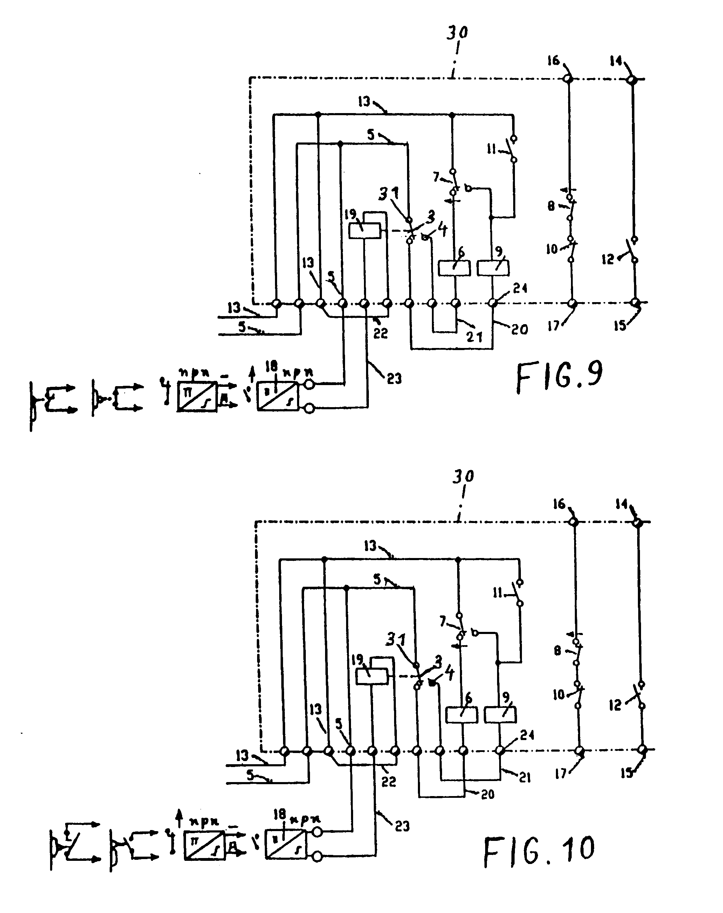

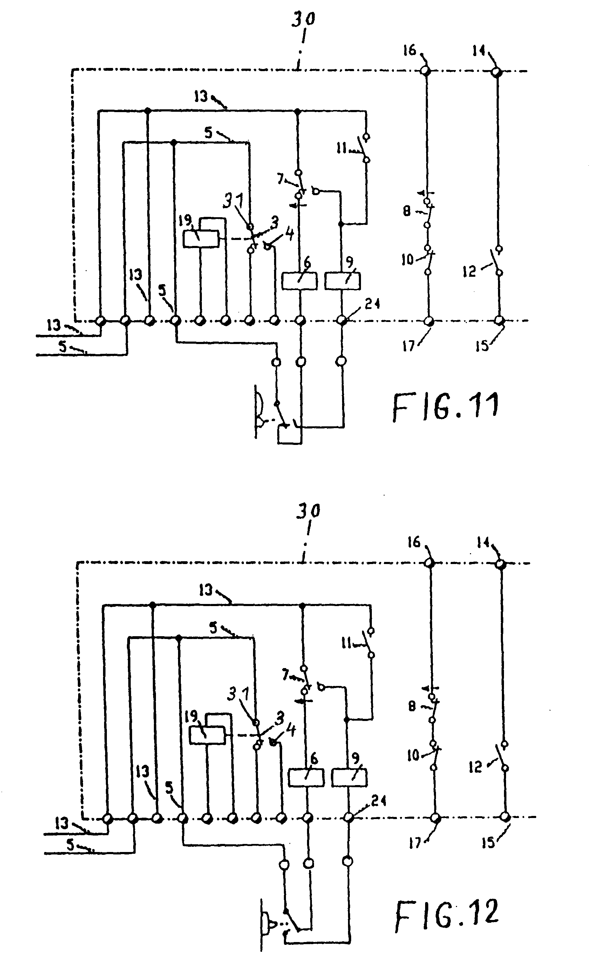

Bei ein- und derselben Grundschaltung gemäß Fig. 2, die in dem Gehäuse 30 untergebracht ist bzw. die von der strichpunktierten Linie umrahmt ist, kann man nun zahlreiche Varianten der erfindungsgemäßen Anordnung ausführen, die in den Fig. 3 bis 12 dargestellt sind. Statt des besonderen Näherungsschalters 18 gemäß Fig. 2 kann man zahlreiche andere Typen von Geberelementen verwenden, die in den Fig. 3 bis 10 zur Vereinfachung des Vergleichs ebenfalls mit dem Bezugszeichen 18 versehen sind. Ferner können andere Komponenten hinzugefügt werden oder die Näherungsschalter können durch andere Geberelemente ersetzt werden. Desweiteren können die eigens zu diesem Zweck am Gehäuse vorgesehenen Verdrahtungen bzw. Drahtbrücken, je nachdem, ob die Initiatoren bedämpft oder unbedämpft sind, wie zeichnerisch dargestellt, geändert werden. Damit ergeben sich zunächst zehn verschiedene Grundschaltungen, die in den Fig. 3 bis 12 dargestellt sind. Bei jeder dieser Grundschaltungen sind andere Geberelemente bzw. Signalgeber verwendet, die in den Figuren alternativ angedeutet sind. Da an die meisten Grundschaltungen mehrere Arten von Geberelementen angeschlossen werden können, erhöht sich die Zahl der verschiedenen Varianten von Geberelementen bzw. Signalgebern auf insgesamt sechsundzwanzig. Der Signalwechsel aller dieser Geberelemente kann mit der Schaltungsanordnung gemäß der Erfindung sicher erfaßt und überwacht werden.

Der Übersichtlichkeit halber sind alle diese sechsundzwanzig Varianten auf der nachfolgenden Seite aufgelistet.

Außerdem ist eine Fehleranalyse unter Erläuterung der verwendeten Abkürzungen angeschlossen.

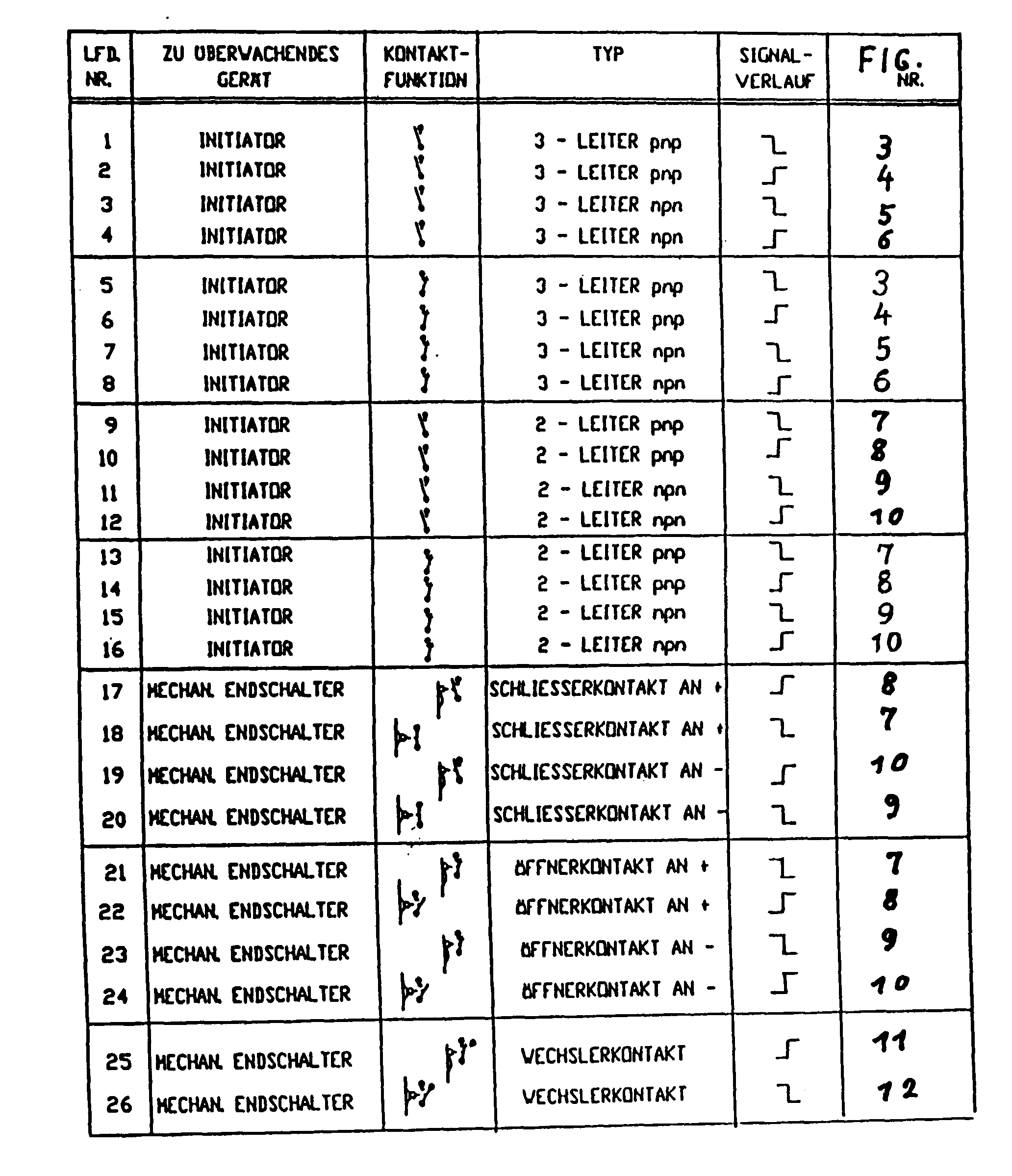

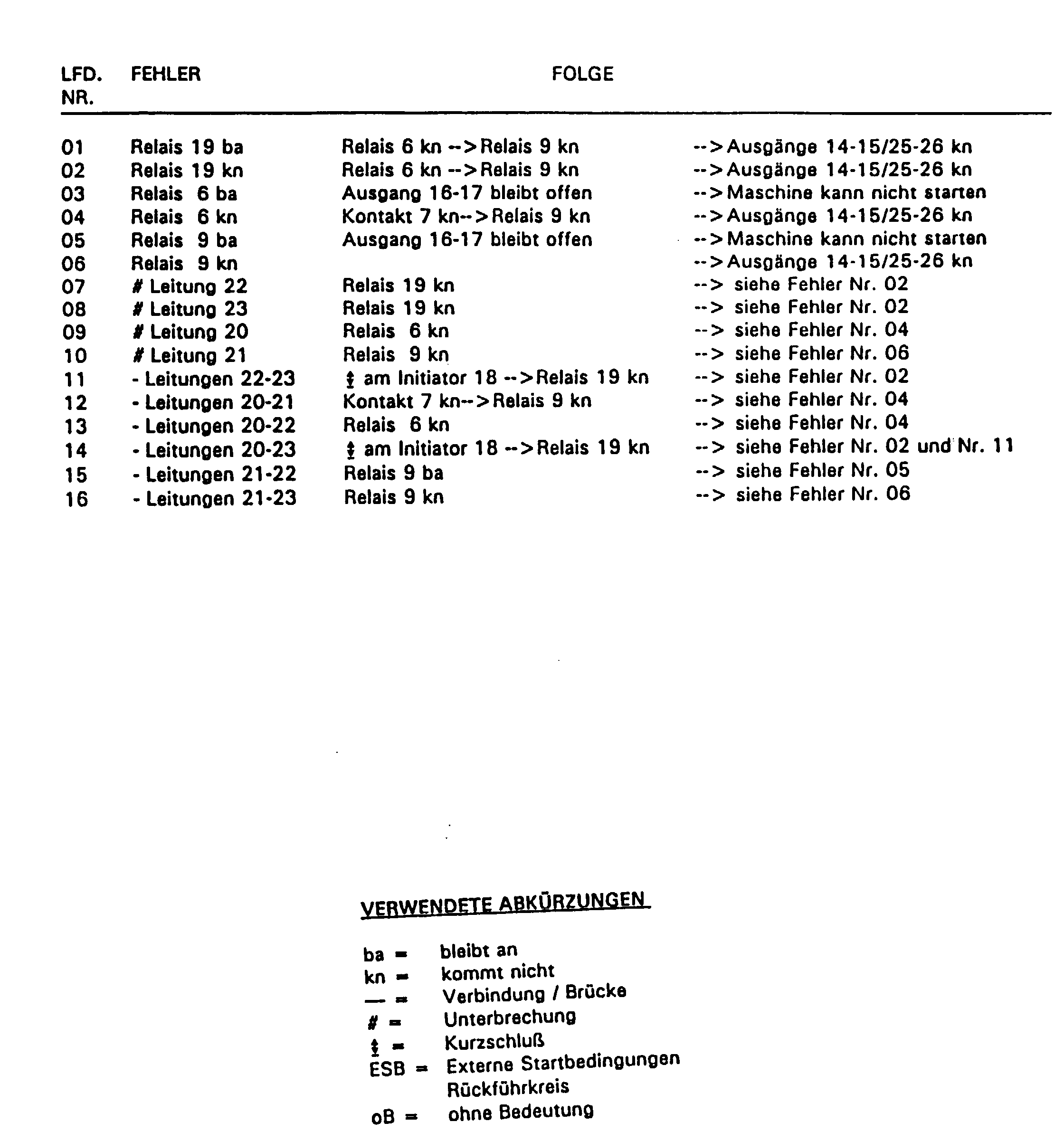

## Patentansprüche

1. Anordnung zur Überwachung eines Signalwechsels in selbstkontrollierenden Steuerungssystemen mit einem Ausschaltwischrelais (6) sowie mit einem Rückführkreis (16, 17), dadurch gekennzeichnet, daß mindestens ein Geberelement (1; 18) vorgesehen ist, welches mit einem Öffnerkontakt (3) und einem Schließerkontakt (4) ausgestattet ist, deren gemeinsamer Leitungspunkt (31) mit einer Versorgungsleitung (5) verbunden ist, wobei der Öffnerkontakt (3) des Geberelementes (1; 18) an das eine Spulenende des Ausschaltwischrelais (6) mit definierter Wischzeit angeschlossen ist, welches mit einem Wechslerkontakt (7) und einem zusätzlichen Öffnerkontakt (8) ausgestattet ist, wobei ferner der Schließerkontakt (4) des Geberelementes (1; 18) mit dem einen Ende der Spule eines weiteren Relais (9) verbunden ist, das einen Öffner- (10) und zwei Schließerkontakte (11, 12) besitzt, wobei außerdem der Öffner- (10) und die Schließerkontakte (11, 12) des Relais (9) sowie die Kontakte (7, 8) des Ausschaltwischrelais (6) zwangsgeführt sind, wobei das andere Spulenende des Ausschaltwischrelais (6) über den Kontaktöffner des eigenen Wechslerkontaktes (7) an der anderen Versorgungsleitung (13) und der Schließerkontakt dieses Wechslerkontaktes (7) mit dem anderen Spulenende des Relais (9) verbunden sind und dieses Spulenende parallel über den eigenen Selbsthaltekontakt (11) an die andere Versorgungsleitung (13) angeschlossen ist, und der Schließerkontakt (12) des Relais (9) in einem Sicherheitskreis (14, 15) liegt, der direkt mit dem Freigabekreis des Steuerungssystems zusammenwirkt und der Öffnerkontakt (8) des Ausschaltwischrelais (6) und der Öffnerkontakt (10) des Relais (9) in dem Rückführkreis (16, 17) liegen.

2. Anordnung nach Anspruch 1, gekennzeichnet durch ein geschlossenes Gehäuse (30), in welchem alle Relais (6, 9; 19) mit ihren Relaiskontakten untergebracht sind, und welches mit Gehäuse-Anschlußklemmen (24) für externe Anschlüsse versehen ist.

3. Anordnung nach Anspruch 1 oder 2, dadurch gekennzeichnet, daß das Geberelement (1; 18) wahlweise einen Positionsschalter oder einen Sicherheitsendschalter oder einen Näherungsschalter oder einen Sensor aufweist.

4. Anordnung nach einem der vorhergehenden Ansprüche, gekennzeichnet durch ein internes Minirelais (19).

5. Anordnung nach Anspruch 3, dadurch gekennzeichnet, daß als Näherungsschalter pnp- oder npn-Typen gewählt sind.

6. Anordnung nach einem der vorhergehenden Ansprüche, dadurch gekennzeichnet, daß zur wahlweisen Überwachung des Signalwechsels von LOW nach HIGH oder von HIGH nach LOW externe Drahtverbindungen (20, 21) an den Spulenanschlüssen der Relais (6, 9) vertauschbar sind.

7. Anordnung nach einem der vorhergehenden Ansprüche, dadurch gekennzeichnet, daß zur wahlweisen Überwachung des Signalwechsels von LOW nach HIGH oder von HIGH nach LOW das Geberelement (1; 18) Schließerfunktion oder Öffnerfunktion aufweist.

8. Anordnung nach einem der vorhergehenden Ansprüche, dadurch gekennzeichnet, daß das Relais (9) einen weiteren Schließerkontakt (27) aufweist, der in einem weiteren potentialfreien Sicherheitskreis (25, 26) liegt.

## Claims

1. Arrangement for monitoring a signal-switching in self-checking controlling systems, comprising an inverting, single-pulse actuated relay (6) as well as a feedback circuit (16,17), characterized in that at least one signal source (1;18) is provided which is equipped with a normally-closed contact (3) and a normally-open contact (4) of which the junction (31) is connected to a supply line (5), the normally-closed contact (3) of the signal source (1;18) being connected to one coil end of the inverting, single-pulse actuated relay (6) evincing a defined pulse width, said relay being fitted with a change-over contact (7) and an additional normally-closed contact (8), the normally-open contact (4) of the signal source (1;18) being connected to one end of the coil of a further relay (9) comprising one normally-closed contact (10) and two normally-open contacts (11,12), the normally-closed contact (10) and the normally-open contacts (11,12) of the relay (9) as well as the contacts (7,8) of the inverting, single-pulse actuated relay (6) being ganged, and the other end of the coil of the inverting, single-pulse actuated relay (6) being connected through its own changeover contact (7) to the other supply line (13) and the normally-open contact of this changeover contact (7) being connected to the other end of the coil of the relay (9), said latter coil end being connected in parallel through its own self-latching contact (11) to the other supply line (13), the normally-open contact (12) of the relay (9) being in a safety circuit (14,15) directly cooperating with the release circuit of the control system, and the normally-closed contact (8) of the inverting, single-pulse actuated relay (6) and the normally-closed contact (10) of the relay (9) being in a feedback circuit (16,17).

2. Arrangement according to claim 1, characterized by a sealed housing (30) wherein all relays (6,9;19) with their relay contacts are housed and which is fitted with housing hookup terminals (24) for external hookup.

3. Arrangement according to claim 1 or 2, characterized in that the signal source (1;18) selectively comprises one of a position switch, a safety limit switch, a proximity switch and a sensor.

4. Arrangement according to any one of the preceding claims, characterized by an internal miniature relay (19).

5. Arrangement according to claim 3, characterized in that pnp and npn types are selected as proximity switches.

6. Arrangement according to any one of the preceding claims, characterized in that for the selective monitoring of signal changes from LOW to HIGH or from HIGH to LOW external wiring (20,21) at the coil connections of the relays (6,9) are interchangeable.

7. Arrangement according to any one of the preceding claims, characterized in that to selectively monitor the signal change from LOW to HIGH or from HIGH to LOW the signal source (1;18) comprises normally-open or normally-closed functions.

8. Arrangement according to any one of the preceding claims, characterized in that the relay (9) comprises a further normally-open contact (27) present in a further voltage-free safety circuit (25,26).

## Revendications

1. Arrangement pour la surveillance d'un changement de signal dans des systèmes de pilotage comprenant un relais au contact de passage au relâchement (6) ainsi qu'une boucle de rétroaction (16,17), caractérisé en ce qu'est pourvu au moins un émetteur (1;18) équipé d'un contact repos (3) et d'un contact contacteur (4) dont le point de ligne commun (31) est relié à une ligne d'alimentation (5), le contact repos (3) de l'émetteur (1;18) étant relié, avec un temps de passage défini, à l'une des extrémités de la bobine du relais au contact de passage au relâchement (6) qui est équipé d'un contact inverseur (7) et d'un contact repos additionel (8), le contact contacteur (4) de l'émetteur (1;18) étant relié en outre à l'une des extrémités de la bobine d'un autre relais (9) ayant un contact repos (10) et deux contacts contacteurs (11,12), le contact repos (10) et les contacts contacteurs (11,12) du relais (9) ainsi que les contacts (7,8) du relais au contact de passage au relâchement (6) en outre étant guidés, l'autre extrémité de la bobine du relais au contact de passage au relâchement (6), par le contact repos de l'inverseur propre (7), étant relié à l'autre ligne d'alimentation (13), et le contact contacteur dudit inverseur (7) étant relié à l'autre extrémité de la bobine du relais (9), et ladite extrémité de la bobine, par le contact à auto-entretien propre (11), étant relié de manière parallele à l'autre ligne d'alimentation (13), et le contact contacteur (12) du relais (9) étant situé dans un circuit de sécurité qui coopère directement avec le circuit de relâchement du système de pilotage, et le contact repos (8) du relais au contact de passage au relâchement (6) et le contact contacteur (10) du relais (9) étant situés dans la boucle de rétroaction (16,17).

2. Arrangement selon la revendication 1, caractérisé par une boîte fermée (30) dans laquelle sont logés toutes les relais (6,9;19) avec leur contacts de relais, et ladite boîte étant pourvue des bornes de raccordement (24) pour des raccordements externes.

3. Arrangement selon la revendication 1 ou 2, caractérisé en ce que l'émetteur (1;18), d'une façon facultative, a un actionneur de positionnement ou un limiteur extrême de course ou un détecteur de proximité ou un capteur.

4. Arrangement selon l'une quelconque des revendications précédentes, caractérisé par un relais miniature interne (19).

5. Arrangement selon la revendication 3, caractérisé en ce que comme détecteurs de proximité on a choisi les types pnp ou npn.

6. Arrangement selon l'une quelconque des revendications précédentes, caractérisé en ce que, pour la surveillance facultative du changement de signal de BAS vers HAUT ou de HAUT vers BAS, des liaisons externes par fils (20,21) sur les connexions des bobines des relais (6) sont échangeables.

7. Arrangement selon l'une quelconque des revendications précédentes, caractérisé en ce que, pour la surveillance facultative du changement de signal de BAS vers HAUT ou de HAUT vers BAS, l'émetteur (1;18) à une fonction contacteur ou une fonction repos.

8. Arrangement selon l'une quelconque des revendications précédentes, caractérisé en ce que le relais (9) a un autre contact contacteur (27) étant situé dans un autre circuit de sécurité (25,26) libre de potentiel.
